# EUROPÄISCHE PATENTANMELDUNG

(11) **EP 1 211 552 A2**
(43) Veröffentlichungstag der Anmeldung: **05.06.2002**
(21) Anmeldenummer: 01128323.1
(22) Anmeldetag: 27.03.1997
(51) Int. Cl.: G02F 1/15, C08L 71/02, C08G 65/332, H01M 10/40, H01B 1/12

(54) **Für elektochrome Fenster geeignete Mischungen**

(30) Priorität: 29.03.1996 DE 19612769
(62) Teilanmeldung aus: 97915458.0
(71) Anmelder: BASF AKTIENGESELLSCHAFT, 67056 Ludwigshafen (DE)
(72) Erfinder: Möhwald, Helmut, 76855 Annweiler (DE); Bronstert, Bernd, 67166 Otterstadt (DE)
(74) Vertreter: Isenbruck, Günter, Dr.

(57) **Zusammenfassung**

Die vorliegende Erfindung betrifft die Verwendung einer Mischung Ia, enthaltend ein Gemisch IIa, bestehend aus
a) 1 bis 95 Gew.-% eines Feststoffs III, vorzugsweise eines basischen Feststoffs III, mit einer Primärpartikelgröße von 5 nm bis 20 µm und
b) 5 bis 99 Gew.-% einer polymeren Masse IV, erhältlich durch Polymerisation von
   b1) 5 bis 100 Gew.-% bezogen auf die Masse IV eines Kondensationsprodukts V aus
      α) mindestens einer Verbindung VI, die in der Lage ist mit einer Carbonsäure oder einer Sulfonsäure oder einem Derivat oder einem Gemisch aus zwei oder mehr davon zu reagieren, und
      β) mindestens 1 Mol pro Mol der Verbindung VI einer Carbonsäure oder Sulfonsäure VII, die mindestens eine radikalisch polymerisierbare funktionelle Gruppe aufweist, oder eines Derivats davon oder eines Gemischs aus zwei oder mehr davon
      und
   b2) 0 bis 95 Gew.-% bezogen auf die Masse IV einer weiteren Verbindung VIII mit einem mittleren Molekulargewicht (Zahlenmittel) von mindestens 5.000 mit Polyethersegmenten in Haupt- oder Seitenkette,
wobei der Gewichtsanteil des Gemisches IIa an der Mischung Ia 1 bis 100 Gew.-% beträgt, wobei ein basischer Feststoff III mit einer Primärpartikelgröße von 5 nm bis 20 µm ausgeschlossen ist, in elektrochromen Fenstern.

## Beschreibung

Die vorliegende Erfindung ist eine Teilanmeldung der EP 97 915 458.0 und betrifft Mischungen, die für die Verwendung in elektrochromen Fenstern geeignet sind, sowie elektrochrome Fenster enthaltend derartige Mischungen.

Elektrochemische, insbesondere wiederaufladbare Zellen sind allgemein bekannt, beispielsweise aus "Ullmann's Encyclopedia of Industrial Chemistry", 5. Ed., Vol A3, VCH Verlagsgesellschaft mbH, Weinheim, 1985, Seite 343-397.

Unter diesen Zellen nehmen die Lithiumbatterien und die Lithiumionenbatterien insbesondere als Sekundärzellen aufgrund ihrer hohen spezifischen Energiespeicherdichte eine besondere Stellung ein.

Solche Zellen enthalten in der Kathode, wie u.a. in obigem Zitat aus "Ullmann" beschrieben, lithiierte Mangan-, Cobalt-, Vanadium- oder NickelMischoxide, wie sie im stöchiometrisch einfachsten Fall als LiMn₂O₄, LiCoO₂, LiV₂O₅ oder LiNiO₂ beschrieben werden können.

Mit Verbindungen, die Lithiumionen in ihr Gitter einbauen können, wie z.B. Graphit, reagieren diese Mischoxide reversibel unter Ausbau der Lithiumionen aus dem Kristallgitter, wobei in diesem die Metallionen wie Mangan-, Cobalt- oder Nickelionen oxidiert werden. Diese Reaktion läßt sich in einer elektrochemischen Zelle zur Stromspeicherung nutzen, indem man die Lithiumionen aufnehmende Verbindung, also das Anodenmaterial, und das lithiumhaltige Mischoxid, also das Kathodenmaterial, durch einen Elektrolyten trennt, durch welchen die Lithiumionen aus dem Mischoxid in das Anodenmaterial wandern (Ladevorgang).

Die zur reversiblen Speicherung von Lithiumionen geeigneten Verbindungen werden dabei üblicherweise auf Ableitelektronen mittels eines Bindemittels fixiert.

Bei der Aufladung der Zelle fließen Elektronen durch eine äußere Spannungsquelle und Lithiumkationen durch den Elektrolyten zum Anodenmaterial. Bei der Nutzung der Zelle fließen die Lithiumkationen durch den Elektrolyten, die Elektronen hingegen durch einen Nutzwiderstand vom Anodenmaterial zum Kathodenmaterial.

Zur Vermeidung eines Kurzschlusses innerhalb der elektrochemischen Zelle befindet sich zwischen den beiden Elektroden eine elektrisch isolierende, für Lithiumkationen aber durchgängige Schicht. Dies kann ein sogenannter Festelektrolyt oder ein gewöhnlicher Separator sein.

Festelektrolyte und Separatoren bestehen bekanntermaßen aus einem Trägermaterial, in das eine dissoziierbare, Lithiumkationen enthaltende Verbindung zur Erhöhung der Lithiumionenleitfähigkeit und üblicherweise weitere Zusatzstoffe wie Lösungsmittel inkorporiert werden.

Als Trägermaterial schlägt z.B. die US-A 5,296,318 und die US-A 5,429,891 ein Copolymerisat aus Vinylidendifluorid und Hexafluorpropen vor. Die Verwendung derartiger, hochresistenter (Co)polymere ist jedoch mit einer Reihe von Nachteilen behaftet.

Derartige Polymere sind nicht nur teuer, sondern lassen sich auch nur schlecht in Lösung bringen. Ferner erhöhen sie aufgrund ihrer vergleichsweise geringen Lithiumkationen-Leitfähigkeit den Widerstand der Zelle, so daß man bereits bei der Herstellung der isolierenden Schicht den Elektrolyten, der üblicherweise aus einer Lithiumkationen enthaltenden Verbindung, wie LiPF₆, LiAsF₆ oder LiSbF₆ und einem organischen Lösungsmittel wie Ethylencarbonat oder Propylencarbonat besteht, zuzugeben hat (US-A 5,296,318, US-A 5,429,891). Außerdem lassen sich derartige Polymere nur mit z.B. hohen Anteilen von Weichmachern, z.B. Di-n-butylphthalat, und von pyrogenen Kieselsäuren verarbeiten, die zugesetzt werden, um einerseits eine ausreichende Verfilmung und Kohäsion der Elektrolytschicht und die Verklebbarkeit mit den Elektrodenschichten und andererseits eine ausreichende Leitfähigkeit und Permeabilität für Lithiumkationen zu gewährleisten. Der Weichmacher muß dann vor Inbetriebnahme der Batterien durch einen im technischen Maßstab überaus schwierigen und teuren Extraktiönsschritt quantitativ aus dem Schichtverbund von Anode, Festelektrolyt- oder Separatorschicht und Kathodenschicht entfernt werden.

Ferner sind Festelektrolyte auf der Basis von Polyalkylenoxiden bekannt und z.B. in der EP-A 559 317, der EP-A 576 686, der EP-A 537 930, der EP-A 585 072 und der US 5 279 910 beschrieben. Die dort beschriebenen Polyether sind an den End- bzw. funktionellen Gruppen modifiziert, z.B. durch (Meth)acryloyl-Gruppen, und werden vor der Verwendung als Festelektrolyt durch Energiezufuhr (Wärme, Licht) vernetzt. Ferner enthalten sie im allgemeinen ein Leitsalz, z.B. LiPF₆, zur Verbesserung ihrer Leitfähigkeit. Die Verwendung eines Feststoffs zur Verbesserung der mechanischen, thermischen und elektrischen Festigkeit des Festelektrolyts wird dort nicht beschrieben. Demgemäß weisen auch die dort beschriebenen Systeme - trotz Vernetzung - nicht immer zufriedenstellende Eigenschaften bzgl. der mechanischen Festigkeit, der Porosität der erhaltenen Folien und der Kurzschlußfestigkeit auf.

Der vorliegenden Erfindung liegt daher die Aufgabe zugrunde, den genannten Nachteilen abzuhelfen und eine Mischung zur Verfügung zu stellen, die insbesondere zur Herstellung von Festelektrolyten und Separatoren geeignet ist, aber auch bei der Herstellung von Elektroden in elektrochemischen Zellen und für andere, hierin beschriebene Anwendungen verwendet werden kann.

Bedingt durch insbesondere die Anwesenheit eines Feststoffs III, wie nachfolgend definiert, führt die Verwendung der erfindungsgemäßen Mischung zu Festelektrolyten, Separatoren oder Elektroden, die, verglichen mit den bislang bekannten Systemen, eine verbesserte Kurzschlußfestigkeit, eine erhöhte Druckfestigkeit, insbesondere bei erhöhten Temperaturen von oberhalb 120 °C, sowie eine größere Porosität aufweisen, und darüber hinaus in der Lage sind, die Bildung von Li-Dendriten nachhaltig zu unterdrücken. Außerdem bedingt die Anwesenheit des Feststoffs eine verbesserte Zyklenstabilität und eine höhere Strombelastbarkeit einer elektrochemischen Zelle. Bei der Verwendung der bevorzugt eingesetzten basischen Feststoffe wird ferner die während des Betriebs einer elektrochemischen Zelle gebildete Säure abgefangen bzw. neutralisiert.

Demgemäß betrifft die vorliegende Erfindung in einer Ausführungsform eine Mischung Ia, enthaltend ein Gemisch IIa, bestehend aus
a) 1 bis 95 Gew.-% eines Feststoffs III, vorzugsweise eines basischen Feststoffs III mit einer Primärpartikelgröße von 5 nm bis 20 µm und
b) 5 bis 99 Gew.-% einer polymeren Masse IV, erhältlich durch Polymerisation von
   b1) 5 bis 100 Gew.-% bezogen auf die Masse IV eines Kondensationsprodukts V aus
      α) mindestens einer Verbindung VI, die in der Lage ist mit einer Carbonsäure oder einer Sulfonsäure oder einem Derivat oder einem Gemisch aus zwei oder mehr davon zu reagieren, und
      β) mindestens 1 Mol pro Mol der Verbindung VI einer Carbonsäure oder Sulfonsäure VII, die mindestens eine radikalisch polymerisierbare funktionelle Gruppe aufweist, oder eines Derivats davon oder eines Gemischs aus zwei oder mehr davon
      und
   b2) 0 bis 95 Gew.-% bezogen auf die Masse IV einer weiteren Verbindung VIII mit einem mittleren Molekulargewicht (Zahlenmittel) von mindestens 5.000 mit Polyethersegmenten in Haupt- oder Seitenkette,
wobei der Gewichtsanteil des Gemisches IIa an der Mischung Ia 1 bis 100 Gew.-% beträgt.

Vorzugsweise ist die obige Mischung Ia eine Mischung enthaltend ein Gemisch IIa, bestehend aus
a) 1 bis 95 Gew.-% eines Feststoffs III, vorzugsweise eines basischen Feststoff III, mit einer Primärpartikelgröße von 5 nm bis 20 µm und
b) 5 bis 99 Gew.-% einer polymeren Masse IV, erhältlich durch Polymerisation von
   b1) 5 bis 100 Gew.-% bezogen auf die Masse IV eines Kondensationsprodukts V aus
      α) einem mehrwertigen Alkohol VI, welcher in der Hauptkette Kohlenstoff- und Sauerstoffatome enthält,
         und
      β) mindestens 1 Mol pro Mol des mehrwertigen Alkohols VI einer α,β-ungesättigten Carbonsäure VII,
      und
   b2) 0 bis 95 Gew.-% bezogen auf die Masse IV einer weiteren Verbindung VIII mit einem mittleren Molekulargewicht (Zahlenmittel) von mindestens 5000 mit Polyethersegmenten in Haupt- oder Seitenkette,
wobei der Gewichtsanteil des Gemisches IIa an der Mischung Ia 1 bis 100 Gew.-% beträgt.

In einer weiteren Ausführungsform betrifft die vorliegende Erfindung eine Mischung Ib, enthaltend ein Gemisch IIb, bestehend aus
a) 1 bis 95 Gew.-% eines Feststoffs III, vorzugsweise eines basischen Feststoffs III, mit einer Primärpartikelgröße von 5 nm bis 20 µm und
b) 5 bis 99 Gew.-% eines Polymers IX, erhältlich durch Polymerisation von
   b1) 5 bis 75 Gew.-%, bezogen auf das Polymer IX einer zur radikalischen Polymerisation befähigten ungesättigten Verbindung X, die verschieden von der obigen Carbonsäure oder der Sulfonsäure VII oder einem Derivat davon ist, oder eines Gemisches aus zwei oder mehr davon
      und
   b2) 25 bis 95 Gew.-%, bezogen auf das Polymer IX einer weiteren Verbindung VIII mit einem mittleren Molekulargewicht (Zahlenmittel) von mindestens 5.000 mit Polyethersegmenten in Haupt- oder Seitenkette,
wobei der Gewichtsanteil des Gemisches IIb an der Mischung Ib 1 bis 100 Gew.-% beträgt.

Als Feststoff III werden in erster Linie anorganische Feststoffe, vorzugsweise ein anorganischer basischer Feststoff, ausgewählt aus der Gruppe bestehend aus Oxiden, Mischoxiden, Silicaten, Sulfaten, Carbonaten, Phosphaten, Nitriden, Amiden, Imiden und Carbiden der Elemente der I., II., III. oder IV. Hauptgruppe oder der IV. Nebengruppe des Periodensystems; einem Polymer, ausgewählt aus der Gruppe bestehend aus Polyethylen, Polypropylen, Polystyrol, Polytetrafluorethylen, Polyvinylidenfluorid, Polyamiden, Polyimiden; einer Feststoffdispersion enthaltend ein derartiges Polymer; und einem Gemisch aus zwei oder mehr davon, eingesetzt.

Beispielhaft zu nennen sind insbesondere: Oxide, wie z.B. Siliciumdioxid, Aluminiumoxid, Magnesiumoxid oder Titandioxid, Mischoxide, beispielsweise der Elemente Silicium, Calcium, Aluminium, Magnesium, Titan; Silicate, wie z.B. Leiter-, Ketten, Schicht- und Gerüstsilicate; Sulfate, wie z.B. Alkali- und Erdalkalimetall sulfate; Carbonate, beispielsweise Alkali- und Erdalkalimetallcarbonate, wie z.B. Calcium-, Magnesium oder Bariumcarbonat oder Lithium-, Kalium oder Natriumcarbonat; Phosphate, beispielsweise Apatite; Nitride; Amide; Imide; Carbide; Polymere, wie z.B. Polyethylen, Polypropylen, Polystyrol, Polytetrafluorethylen, Polyvinylidenfluorid; Polyamide; Polyimide; oder andere Thermoplaste, Duromere oder Mikrogele, Feststoffdispersionen, insbesondere solche, die die oben genannten Polymere enthalten, sowie Gemische aus zwei oder mehr der oben genannten Feststoffe.

Besonders geeignet sind dabei basische Feststoffe. Unter basischen Feststoffen sollen dabei solche verstanden werden, deren Gemisch mit einem flüssigen, Wasser enthaltenden Verdünnungsmittel, das selber einen pH-Wert von höchstens 7 aufweist, einen höheren pH-Wert als dieses Verdünnungsmittel aufweist.

Die Feststoffe sollten vorteilhaft in der als Elektrolyt verwendeten Flüssigkeit weitestgehend unlöslich sowie in dem Batteriemedium elektrochemisch inert sein.

Besonders geeignet sind Feststoffe, die eine Primärpartikelgröße von 5 nm bis 20 µm, vorzugsweise 0,01 bis 10 µm und insbesondere 0,1 bis 5 µm aufweisen, wobei die angegebenen Partikelgrößen durch Elektronenmikroskopie ermittelt werden. Der Schmelzpunkt der Festoffe liegt vorzugsweise über der für die elektrochemische Zelle üblichen Betriebstemperatur, wobei sich Schmelzpunkte von über 120°C, insbesondere von über 150 °C als besonders günstig erwiesen haben.

Dabei können die Feststoffe bzgl. ihrer äußeren Form symmetrisch sein, d.h. ein Größenverhältnis Höhe : Breite : Länge (Aspektverhältnis) von ungefähr 1 aufweisen und als Kugeln, Granalien, annähernd runde Gebilde, aber auch in Form von beliebigen Polyedern, wie z.B. als Quader, Tetraeder, Hexaeder, Octaeder oder als Bipyramide vorliegen, oder verzerrt oder asymmetrisch sein, d.h. ein Größenverhältnis Höhe : Breite : Länge (Aspektverhältnis) von ungleich 1 aufweisen und z.B. als Nadeln, unsymmetrische Tetraeder, unsymmetrische Bipyramiden, unsymmetrische Hexa- oder Octaeder, Plättchen, Scheiben oder als faserförmige Gebilde vorliegen. Sofern die Feststoffe als asymmetrische Teilchen vorliegen, bezieht sich die oben angegebene Obergrenze für die Primärpartikelgröße auf die jeweils kleinste Achse.

Als Verbindung VI, die in der Lage ist mit einer Carbonsäure oder einer Sulfonsäure VII oder einem Derivat oder einem Gemisch aus zwei oder mehr davon zu reagieren, sind prinzipiell alle Verbindungen verwendbar, die dieses Kriterium erfüllen.

Vorzugsweise wird die Verbindung VI ausgewählt aus der Gruppe bestehend aus einem ein- oder mehrwertigen Alkohol, der in der Hauptkette ausschließlich Kohlenstoffatome aufweist; einem ein- oder mehrwertigen Alkohol, der in der Hauptkette neben mindestens zwei Kohlenstoffatomen mindestens ein Atom aufweist, das ausgewählt wird aus der Gruppe bestehend aus Sauerstoff, Phosphor und Stickstoff; einer Silicium enthaltenden Verbindung; einem mindestens eine primäre Aminogruppe aufweisenden Amin; einem mindestens eine sekundäre Aminogruppe aufweisenden Amin; einem Aminoalkohol; einem ein- oder mehrwertigen Thiol; einer Verbindung mit mindestens einer Thiol- und mindestens einer Hydroxylgruppe; und einem Gemisch aus zwei oder mehr davon.

Unter diesen sind wiederum Verbindungen VI bevorzugt, die zwei oder mehr funktionelle Gruppen aufweisen, die mit der Carbonsäure oder Sulfonsäure reagieren können.

Bei der Verwendung von Verbindungen VI, die als funktionelle Gruppe Aminogruppen enthalten, ist es bevorzugt, solche mit sekundären Amino-gruppen zu verwenden, sodaß nach der Kondensation/Vernetzung entweder überhaupt keine oder nur geringe Mengen an freien NH-Gruppen in der Mischung Ia vorhanden sind.

Im einzelnen sind als bevorzugte Verbindungen zu nennen:
ein- oder mehrwertige Alkohole, die in der Hauptkette ausschließlich Kohlenstoffatome aufweisen, mit 1 bis 20, vorzugsweise 2 bis 20 und insbesondere 2 bis 10 alkoholischen OH-Gruppen, insbesondere zwei-, drei- und vierwertige Alkohole, vorzugsweise mit 2 bis 20 Kohlenstoffatomen, wie z.B. Ethylenglycol, Propan-1,2- oder -1,3-diol, Butan-1,2- oder -1,3-diol, Buten-1,4- oder Butin-1,4-diol, Hexan-1,6-diol, Neopentylglycol, Dodecan-1,2-diol, Glycerin, Trimethylolpropan, Pentaerythrit oder Zuckeralkohole, Hydrochinon, Novolak, Bisphenol A, wobei jedoch auch, wie aus obiger Definition hervorgeht, einwertige Alkohole, wie z.B. Methanol, Ethanol, Propanol, n-, sek.- oder tert.-Butanol, usw. eingesetzt werden können; ferner können auch Polyhydroxyolefine, bevorzugt solche mit zwei endständigen Hydroxylgruppen, wie z.B. α,ω-Dihydroxybutadien, verwendet werden;
Polyesterpolyole, wie sie z.B. aus Ullmanns *Encyclopädie der technischen Chemie,* 4. Aufl., Bd. 19, S. 62-65 bekannt sind und beispielsweise durch Umsetzung zweiwertiger Alkohole mit mehrwertigen, bevorzugt zweiwertigen Polycarbonsäuren erhalten werden;
ein- oder mehrwertige Alkohole, die in der Hauptkette neben mindestens zwei Kohlenstoffatomen mindestens ein Sauerstoffatom enthalten, vorzugsweise Polyetheralkohole, wie z.B. Polymerisationsprodukte von Alkylenepoxiden, beispielsweise Isobutylenoxid, Propylenoxid, Ethylenoxid, 1,2-Epoxybutan, 1,2-Epoxypentan, 1,2-Epoxyhexan, Tetrahydrofuran, Styroloxid, wobei auch an den Endgruppen modifizierte Polyetheralkohole, wie z.B. mit NH₂-Endgruppen modifizierte Polyetheralkohole verwendet werden können; diese Alkohole besitzen vorzugsweise ein Molekulargewicht (Zahlenmittel) von 100 bis 5.000, weiter bevorzugt 200 bis 1.000, und insbesondere 300 bis 800; derartige Verbindungen sind an sich bekannt und beispielsweise unter den Marken Pluriol® oder Pluronic® (Firma BASF Aktiengesellschaft) kommerziell verfügbar;
Alkohole, wie oben definiert, in denen ein Teil oder alle Kohlenstoffatome durch Silicium ersetzt sind, wobei hier insbesondere Polysiloxane oder Alkylenoxid/Siloxan-Copolymere oder Gemische aus Polyetheralkoholen und Polysiloxanen, wie sie beispielsweise in der EP-B 581 296 und der EP-A 525 728 beschrieben sind, verwendet werden können, wobei auch bzgl. des Molekulargewichts dieser Alkohole das auch oben Gesagte gilt;
Alkohole, wie oben definiert, insbesondere Polyetheralkohole, bei denen ein Teil oder alle Sauerstoffatome durch Schwefelatome ersetzt sind, wobei bzgl. des Molekulargewichts dieser Alkohole ebenfalls das oben Gesagte gilt;
ein- oder mehrwertige Alkohole, die in der Hauptkette neben mindestens zwei Kohlenstoffatomen mindestens ein Phosphoratom oder mindestens ein Stickstoffatom enthalten, wie z.B. Diethanolamin und Triethanolamin;
Lactone, die sich von Verbindungen der allgemeinen Formel HO-(CH₂)_{z}-COOH ableiten, wobei z eine Zahl von 1 bis 20 ist, wie z.B. ∈-Caprolacton, β-Propiolacton, γ-Butyrolacton oder Methyl- ∈-caprolacton;
eine Silicium enthaltende Verbindung, wie z.B. Di- oder Trichlorsilan, Phenyltrichlorsilan, Diphenyldichlorsilan, Dimethylvinylchlorsilan;
Silanole, wie z.B. Trimethylsilanol;
ein mindestens eine primäre und/oder sekundäre Aminogruppe aufweisendes Amin, wie z.B. Butylamin, 2-Ethylhexylamin, Ethylendiamin, Hexamethylendiamin, Diethylentriamin, Tetraethylenpentamin, Pentaethylenhexamin, Anilin, Phenylendiamin;
Polyetherdiamine, wie z.B. 4,7-Dioxydecan-1,10-diamin, 4,11-Dioxytetradecan-1,14-diamin;
ein ein- oder mehrwertiges Thiol, wie z.B. aliphatische Thiole, wie z.B. Methanthiol, Ethanthiol, Cyclohexanthiol, Dodecanthiol; aromatische Thiole, wie z.B. Thiophenol, 4-Chlorthiophenol, 2-Mercaptoanilin;
eine Verbindung mit mindestens einer Thiol- und mindestens einer Hydroxylgruppe, wie z.B. 4-Hydroxythiophenol sowie Monothioderivate der oben definierten mehrwertigen Alkohole;
Aminoalkohole, wie z.B. Ethanolamin, N-Methyl-ethanolamin, N-Ethyl-ethanolamin, N-Butyl-ethanolamin, 2-Amino-1-propanol, 2-Amino-1-phenylethanol, Mono- oder Polyaminopolyole mit mehr als zwei aliphatisch gebundenen Hydroxylgruppen, wie z.B. Tris(hydroxymethyl)- methylamin, Glucamin, N,N'-Bis-(2-hydroxyethyl)-ethylendiamin.

Es können auch Gemische aus zwei oder mehr der oben definierten Verbindungen VI eingesetzt werden.

Die oben erwähnten Verbindungen VI werden erfindungsgemäß mit einer Carbonsäure oder Sulfonsäure VII, die mindestens eine radikalisch polymerisierbare funktionelle Gruppe aufweist, oder einem Derivat davon oder einem Gemisch aus zwei oder mehr davon kondensiert, wobei mindestens eine, vorzugsweise alle der freien zur Kondensation befähigten Gruppen innerhalb der Verbindungen VI mit der Verbindung VII kondensiert werden.

Als Carbonsäure oder Sulfonsäure VII können im Rahmen der vorliegenden Erfindung prinzipiell alle Carbon- und Sulfonsäuren, die mindestens eine radikalisch polymerisierbare funktionelle Gruppe aufweisen, sowie deren Derivate eingesetzt werden. Dabei umfaßt der hier verwendete Begriff "Derivate" sowohl Verbindungen, die sich von einer Carbon- oder Sulfonsäure ableiten, die an der Säurefunktion modifiziert ist, wie z.B. Ester, Säurehalogenide oder Säureanhydride, als auch Verbindungen, die sich von einer Carbon- oder Sulfonsäure ableiten, die am Kohlenstoffgerüst der Carbon- oder Sulfonsäure modifiziert ist, wie z.B. Halogencarbon- oder -sulfonsäuren.

Als Verbindung VII sind dabei insbesondere zu nennen:
α,β-ungesättigte Carbonsäuren oder β,γ-ungesättigte Carbonsäuren.

Besonders geeignete α,β-ungesättigte Carbonsäuren sind dabei solche der Formel 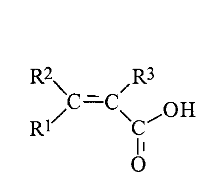 in der R¹, R² und R³ Wasserstoff oder C₁- bis C₄-Alkylreste darstellen, wobei unter diesen wiederum Acrylsäure und Methacrylsäure bevorzugt sind; weiterhin gut einsetzbar sind Zimtsäure, Maleinsäure, Fumarsäure, Itaconsäure, oder p-Vinylbenzoesäure, sowie Derivate davon, wie z.B. Anhydride, wie z.B. Maleinsäure- oder Itaconsäureanhydrid;
Halogenide, insbesondere Chloride, wie z.B. Acryl- oder Methacrylsäurechlorid;
Ester, wie z.B. (Cyclo)alkyl(meth)acrylate mit bis zu 20 C-Atomen im Alkylrest, wie z.B. Methyl-, Ethyl-, Propyl-, Butyl-, Hexyl-, 2-Ethylhexyl-, Stearyl-, Lauryl-, Cyclohexyl-, Benzyl-, Trifluormethyl-, Hexafluorpropyl-, Tetrafluorpropyl(meth)acrylat, Polypropylenglycolmono(meth)acrylate, Polyethylenglycolmono(meth)acrylate, Poly(meth)acrylate von mehrwertigen Alkoholen, wie z.B. Glycerindi(meth)acrylat, Trimethylolpropan-di(meth)acrylat, Pentaerythrit-di- oder -tri(meth)acrylat, Diethylenglycolbis(mono-(2-acryloxy)ethyl)carbonat, Poly(meth)acrylate von Alkoholen, die selbst wiederum eine radikalisch polymeriserbare Gruppe aufweisen, wie z.B. Ester aus (Meth)acrylsäure und Vinyl- und/oder Allylalkohol;
Vinylester anderer aliphatischer oder aromatischer Carbonsäuren, wie z. B.
Vinylacetat, Vinylpropionat, Vinylbutyrat, Vinylhexanoat, Vinyloctanoat, Vinyldecanoat, Vinylstearat, Vinylpalminat, Vinylcrotonoat, Divinyladipat, Divinylsebacat, 2-Vinyl-2-ethylhexanoat, Vinyltrifluoracetat;
Allylester anderer aliphatischer oder aromatischer Carbonsäuren, wie z. B.
Allylacetat, Allylpropionat, Allylbutyrat, Allylhexanoat, Allyloctanoat, Allyldecanoat, Allylstearat, Allylpalminat, Allylcrotonoat, Allylsalicylat, Allyllactat, Diallyloxalat, Diallylmalonat, Diallylsuccinat, Diallylglutarat, Diallyladipat, Diallylpimelat, Diallylcinnatricarboxylat, Allylltrifluoracetat, Allylperfluorbutyrat, Allylperfluoroctanoat;
β,γ-ungesättigte Carbonsäuren oder deren Derivate, wie z. B. Vinylessigsäure, 2-Methylvinylessigsäure, Isobutyl-3-butenoat, Allyl-3-butenoat, Allyl-2-hydroxy-3-butenoat, Diketen;
Sulfonsäuren, wie z.B. Vinylsulfonsäure, Allyl- und Methallylsulfonsäure, sowie deren Ester und Halogenide, Benzolsulfonsäurevinylester, 4-Vinylbenzolsulfonsäureamid.

Es können auch Gemische aus zwei oder mehr der oben beschriebenen Carbon- und/oder Sulfonsäuren eingesetzt werden.

Als zur Herstellung des Polymers IX verwendbare zur radikalischen Polymerisation befähigte Verbindung X sind im einzelnen folgende zu nennen:
Olefinische Kohlenwasserstoffe, wie z.B. Ethylen, Propylen, Butylen, Isobuten, Hexen oder höhere Homologen und Vinylcyclohexan;
(Meth)acrylnitril;
halogenhaltige olefinische Verbindungen, wie z.B. Vinylidenfluorid, Vinylidenchlorid, Vinylfluorid, Vinylchlorid, Hexafluorpropen, Trifluorpropen, 1,2-Dichlorethylen, 1,2-Difluorethylen und Tetrafluorethylen;
Vinylalkohol, Vinylacetat, N-Vinylpyrrolidon, N-Vinylimidazol, Vinylformamid;
Phosphornitridchloride, wie z.B. Phosphordichloridnitrid, Hexachlor(triphosphazen), sowie deren durch Alkoxy-, Phenoxy-, Amino- und Fluoralkoxy-Gruppen teilweise oder vollständig substituierte Derivate, d.h. Verbindungen, die zu Polyphosphazenen polymerisiert werden können;
aromatische, olefinische Verbindungen, wie z.B. Styrol, α-Methylstyrol;
Vinylether, wie z.B. Methyl-, Ethyl-, Propyl-, Isopropyl-, Butyl-, Isobutyl-, Hexyl-, Octyl-, Decyl-, Dodecyl-, 2-Ethylhexyl-, Cyclohexyl-, Benzyl-, Trifluormethyl-, Hexafluorpropyl-, Tetrafluorpropylvinylether.

Es können selbstverständlich auch Gemische der obigen Verbindungen X eingesetzt werden, wobei dann Copolymere entstehen, die je nach Herstellungsart die Monomeren statistisch verteilt enthalten, oder Blockcopolymere ergeben.

Diese Verbindungen X wie auch die Kondensationsprodukte V werden nach herkömmlicher, dem Fachmann wohl bekannter Art polymerisiert, vorzugsweise radikalisch polymerisiert, wobei bezüglich der erhaltenen Molekulargewichte das hierin nachstehend bezüglich der Verbindung VIII Gesagte gilt.

Als Verbindung VIII kommen in erster Linie Verbindungen mit einem mittleren Molekulargewicht (Zahlenmittel) von mindestens 5.000, vorzugsweise 5.000 bis 20.000.000, insbesondere 100.000 bis 6.000.000, in Betracht, die in der Lage sind, Lithiumkationen zu solvatisieren und als Bindemittel zu fungieren. Geeignete Verbindungen VIII sind beispielsweise Polyether und Copolymere, die mindestens 30 Gew.-% der folgenden Struktureinheit, bezogen auf das Gesamtgewicht der Verbindung VIII, aufweist: 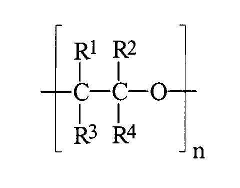 wobei R¹, R², R³ und R⁴ Arylgruppen, Alkylgruppen, vorzugsweise Methylgruppen, oder Wasserstoff darstellen, gleich oder unterschiedlich sein und Heteroatome wie Sauerstoff, Stickstoff, Schwefel oder Silizium enthalten können.

Solche Verbindungen sind beispielsweise in: M. B. Armand et. al., Fast Ion Transport in Solids, Elsevier, New York, 1979, S. 131-136, oder in FR-A 7832976 beschrieben.

Die Verbindung VIII kann auch aus Gemischen aus zwei oder mehr solcher Verbindungen bestehen.

Die oben definierten polymere Masse IV bzw. das Polymer IX kann auch in Form eines Schaums vorliegen, wobei dann der Feststoff II als solcher darin verteilt vorliegt.

Die Gemische IIa sollen erfindungsgemäß zu 1 bis 95 Gew.-%, vorzugsweise 25 bis 90 Gew.-% und insbesondere 30 bis 70 Gew.-% aus einem Feststoff III und zu 5 bis 99 Gew.-%, vorzugsweise 10 bis 75 Gew.-% und insbesondere 30 bis 70 Gew.-% aus einer polymeren Masse IV bestehen, wobei die Verbindung VIII der polymeren Masse IV vorteilhaft ein mittleres Molekulargewicht (Zahlenmittel) von 5.000 bis 100.000.000, vorzugsweise 50.000 bis 8.000.000, aufweisen sollte. Die polymere Masse IV kann durch Umsetzung von 5 bis 100 Gew.-%, vorzugsweise 30 bis 70 Gew.-% bezogen auf die polymere Masse IV einer Verbindung V und 0 bis 95 Gew.-%, insbesondere 30 bis 70 Gew.-% bezogen auf die polymere Masse IV einer Verbindung VIII, erhalten werden.

Die Gemische IIb sollen erfindungsgemäß zu 1 bis 95 Gew.-%, vorzugsweise 25 bis 90 Gew.-%, und insbesondere 30 bis 70 Gew.-% aus einem Feststoff III und zu 5 bis 99 Gew.-%, vorzugsweise 10 bis 75 Gew.-% und insbesondere 30 bis 70 Gew.-% aus einem Polymer IX bestehen, wobei die Verbindung VIII des Polymers IX vorteilhaft ein mittleres Molekulargewicht (Zahlenmittel) von 5.000 bis 100.000.000, vorzugsweise 50.000 bis 8.000.000, aufweisen sollte. Das Polymer IX kann durch Umsetzung von 5 bis 75 Gew.-%, vorzugsweise 30 bis 70 Gew.-% bezogen auf das Polymer IX einer Verbindung X und 25 bis 95 Gew.-%, insbesondere 30 bis 70 Gew.-% bezogen auf das Polymer IX einer Verbindung VIII, erhalten werden.

Im folgenden werden die erfindungsgemäßen Mischungen Ia und Ib bzw. die Gemische IIa und IIb gemeinsam diskutiert und als *"erfindungsgemäße Mischung"* bzw. *"efindungsgemäßes Gemisch"* bezeichnet.

Zur Herstellung der erfindungsgemäßen Mischung, die ein erfmdungsgemäßes Gemisch in Mengen von 1 bis 100 Gew.-%, vorzugsweise 35 bis 100 Gew.-% und insbesonder 30 bis 70 Gew.-%, bezogen auf die erfindungsgemäße Mischung enthalten sollte, kann ein Gemisch aus einem Feststoff III, eines Kondensationsprodukts V, gegebenenfalls einer Verbindung VIII, bzw. ein Gemisch aus einem Feststoff III, einer Verbindung X und einer Verbindung VIII und üblichen Zusatzstoffen wie z.B. Weichmachern, vorzugsweise polyethylenoxidhaltige oder polypropylenoxidhaltige Weichmachern, hergestellt werden.

Als Weichmacher können aprotische Lösungsmittel, vorzugsweise solche, die Li-Ionen solvatisieren, wie z.B. Dimethylcarbonat, Diethylcarbonat, Dipropylcarbonat, Diisopropylcarbonat, Dibutylcarbonat, Ethylencarbonat, Propylencarbonat; Oligoalkylenoxide, wie z.B. Dibutylether, Di-tert.-butylether, Dipentylether, Dihexylether, Diheptylether, Dioctylether, Dinonylether, Didecylether, Didodecylether, Ethylenglycoldimethylether, Ethylenglycoldiethylether, 1-tert.-Butoxy-2-methoxyethan, 1-tert.-Butoxy-2-ethoxyethan, 1,2-Dimethoxypropan, 2-Methoxyethylether, 2-Ethoxyethylether, Diethylenglycoldibutylether, Dimethylenglycol-tert.-butylmethylether, Triethylenglycoldimethylether, Tetraethylenglycoldimethylether, γ-Butyrolacton, Dimethylformamid; Kohlenwasserstoffe der allgemeinen Formel CₙH₂ₙ₊₂ mit 7 < n < 50; organische Phosphorverbindungen, insbesondere Phosphate und Phosphonate, wie z.B. Trimethylphosphat, Triethylphosphat, Tripropylphosphat, Tributylphosphat, Triisobutylphosphat, Tripentylphosphat, Trihexylphosphat, Trioctylphosphat, Tris(2-ethylhexyl)phosphat, Tridecylphosphat, Diethyl-n-butylphosphat, Tris(butoxyethyl)phosphat, Tris(2-methoxyethyl)phosphat, Tris(tetrahydrofuryl)phosphat, Tris(1H,1H,5H-octafluorpentyl)phosphat, Tris(1H,1H-trifluorethyl)phosphat, Tris(2-(diethylamino)ethyl)phosphat, Diethylethylphosphonat, Dipropylpropylphosphonat, Dibutylbutylphosphonat, Dihexylhexylphosphonat, Dioctyloctylphosphonat, Ethyldimethylphosphonoacetat, Methyldiethylphosphonoacetat, Triethylphosphonoacetat, Dimethyl(2-oxopropyl)phosphonat, Diethyl(2-oxopropyl)phosphonat, Dipropyl(2-oxopropyl)phosphonat, Ethyldiethoxyphosphinylformiat, Trimethylphosphonoacetat, Triethylphosphonoacetat, Tripropylphosphonoacetat, Tributylphosphonoacetat; organische Schwefelverbindungen, wie z.B. Sulfate, Sulfonate, Sulfoxide, Sulfone und Sulfite, wie z.B. Dimethylsulfit, Diethylsulfit, Glycolsulfit, Dimethylsulfon, Diethylsulfon, Diethylpropylsulfon, Dibutylsulfon, Tetramethylensulfon, Methylsulfolan, Dimethylsulfoxid, Diethylsulfoxid, Dipropylsulfoxid, Dibutylsulfoxid, Tetramethylensulfoxid, Ethylmethansulfonat, 1,4-Butandiolbis(methansulfonat), Diethylsulfat, Dipropylsulfat, Dibutylsulfat, Dihexylsulfat, Dioctylsulfat, SO₂ClF;
Nitrile, wie z.B. Acrylnitril;
Dispergatoren, insbesondere mit Tensidstruktur;
sowie deren Gemische
verwendet werden.

Die erfindungsgemäßen Mischungen können in einem anorganischen, vorzugsweise einem organischen flüssigen Verdünnungsmittel gelöst oder dispergiert werden, wobei die erfindungsgemäße Mischung eine Viskosität von vorzugsweise 100 bis 50.000 mPas aufweisen sollte, und anschließend in an sich bekannter Weise, wie Spritzbeschichtung, Gießen, Tauchen, Spincoaten, Walzenbeschichtung, Bedrucken im Hoch-, Tief oder Flachdruck oder Siebdruckverfahren, auf ein Trägermaterial aufgetragen werden. Die weitere Verarbeitung kann wie üblich erfolgen, z.B. durch Entfernen des Verdünnungsmittels und Aushärten der Mischung.

Als organische Verdünnungsmittel eignen sich aliphatische Ether, insbesondere Tetrahydrofuran und Dioxan, Kohlenwasserstoffe, insbesondere Kohlenwasserstoffgemische wie Benzin, Toluol und Xylol, aliphatische Ester, insbesondere Ethylacetat und Butylacetat und Ketone, insbesondere Aceton, Ethylmethylketon und Cyclohexanon. Es können auch Kombinationen solcher Verdünnungsmittel eingesetzt werden.

Als Trägermaterial kommen die üblicherweise für Elektroden verwendeten Materialien, vorzugsweise Metalle wie Aluminium und Kupfer, in Betracht. Ebenso können temporäre Zwischenträger, wie Folien, insbesondere Polyesterfolien, wie Polyethylenterephthalatfolien, verwendet werden. Solche Folien können vorteilhaft mit einer Trennschicht vorzugsweise aus Polysiloxanen versehen sein.

Ebenso kann die Herstellung der Festelektrolyte und Separatoren thermoplastisch beispielsweise durch Spritzgießen, Schmelzgießen, Pressen, Kneten oder Extrudieren gegebenenfalls mit anschließendem Kalandrierschritt der erfindungsgemäßen Mischung erfolgen.

Nach der Filmbildung der erfindungsgemäßen Mischung können flüchtige Komponenten, wie Lösungsmittel oder Weichmacher, entfernt werden.

Die Vernetzung der erfindungsgemäßen Mischung kann in an sich bekannter Weise erfolgen, beispielsweise durch Bestrahlung mit ionischer oder ionisierender Strahlung, Elektronenstrahl, vorzugsweise mit einer Beschleunigungsspannung zwischen 20 und 2.000 kV und einer Strahlendosis zwischen 5 und 50 Mrad, UV- oder sichtbarem Licht, wobei in üblicher Weise vorteilhaft ein Initiator wie Benzildimethylketal oder 1,3,5-Trimethylbenzoyl-triphenylphosphinoxid in Mengen von insbesondere höchstens 1 Gew.-% bezogen auf die polymere Masse IV bzw. das Polymer IX zugegeben werden und die Vernetzung innerhalb von im allgemeinen 0,5 bis 15 Minuten vorteilhaft unter Inertgas wie Stickstoff oder Argon durchgeführt werden kann; durch thermische radikalische Polymersation, vorzugsweise bei Temperaturen von über 60 °C, wobei man vorteilhaft einen Initiator wie Azo-bis-isobutyronitril in Mengen von im allgemeinen höchstens 5 Gew.-%, vorzugsweise 0,05 bis 1 Gew.-% bezogen auf die polymere Masse IV bzw. das Polymer IX zugeben kann; durch elektrochemisch induzierte Polymerisation; oder durch ionische Polymerisation erfolgen, beispielsweise durch säurekatalysierte kationische Polymerisation, wobei als Katalysator in erster Linie Säuren, vorzugsweise Lewissäuren wie BF₃, oder insbesondere LiBF₄ oder LiPF₆ in Betracht kommen. Lithiumionen enthaltende Katalysatoren wie LiBF₄ oder LiPF₆ können dabei vorteilhaft im Festelektrolyt oder Separator als Leitsalz verbleiben.

Soll die erfindungsgemäße Mischung als Festelektrolyt oder Separator in einer elektrochemischen Zelle eingesetzt werden, werden eine dissoziierbare, Lithiumkationen enthaltende Verbindung ein sogenanntes Leitsalz, und ggf. weitere Zusatzstoffe, wie insbesondere organische Lösungsmittel, ein sogenannter Elektrolyt, inkorporiert.

Diese Stoffe können teilweise oder vollständig bei der Herstellung der Schicht der Mischung beigemischt oder nach der Herstellung der Schicht in die Schicht eingebracht werden.

Als Leitsalze können die allgemein bekannten und beispielsweise in der EP-A 96 629 beschriebenen Leitsalze verwendet werden. Dabei eignen sich insbesondere Verbindungen wie z.B. LiPF₆, LiAsF₆, LiSbF₆, LiClO₄, LiN(CF₃SO₂)₂, LiBF₄ oder LiCF₃SO₃ sowie Mischungen solcher Verbindungen. Diese Leitsalze werden in Mengen von 0,1 bis 50 Gew.-%, vorzugsweise 0,1 bis 20 Gew.-%, insbeondere 1 bis 10 Gew.-%, jeweils bezogen auf das erfindungsgemäße Gemisch, eingesetzt.

Als organische Elektrolyte kommen die vorstehend unter "Weichmachern" diskutierten Verbindungen in Frage, wobei vorzugsweise die üblichen organischen Elektrolyte, bevorzugt Ester wie Ethylencarbonat, Propylencarbonat, Dimethylcarbonat und Diethylcarbonat oder Gemische solcher Verbindungen eingesetzt werden.

Für elektrochemische Zellen geeignete erfindungsgemäße Festelektrolyte, Separatoren und/oder Elektroden sollten vorteilhaft eine Dicke von 5 bis 500 µm, vorzugsweise 10 bis 500 µm, weiter bevorzugt 10 bis 200 µm und insbesondere 20 bis 100 µm aufweisen.

Sofern die erfindungsgemäße Mischung als bzw. zur Herstellung einer Kathode verwendet werden soll, wird eine für Kathoden herkömmlicherweise verwendete elektronenleitende, elektrochemisch aktive Verbindung (Kathodenverbindung), vorzugsweise eine Lithiumverbindung inkorporiert. Zu nennen sind dabei insbesondere:
LiCoO₂, LiNiO₂, LixMnO₂ (0<x≤1), LiₓMn₂O₄ (0<x≤2), LiₓMoO₂ (0<x≤2), LiₓMnO₃ (0<x≤1), LiₓMnO₂ (0<x≤2), LiₓMn₂O₄ (0<x≤2), LiₓV₂O₄ (0<x≤2.5), LiₓV₂O₃ (0<x≤3.5), LiₓVO₂ (0<x≤1), LiₓWO₂ (0<x≤1), LiₓWO₃ (0<x≤1), LiₓTiO₂ (0<x≤1), LiₓTi₂O₄ (0<x≤2), LiₓRuO₂ (0<x≤1), LiₓFe₂O₃ (0<x≤2), LiₓFe₃O₄ (0<x≤2), LiₓCr₂O₃ (0<x≤3), LiₓCr₃O₄ (0<x≤3.8), LiₓV₃S₅ (0<x≤1.8), LiₓTa₂S₂ (0<x≤1), LiₓFeS (0<x≤1), LiₓFeS₂ (0<x≤1), LiₓNbS₂ (0<x≤2.4), LiₓMoS₂ (0<x≤3), LiₓTiS₂ (0<x≤2), LiₓZrS₂ (0<x≤2), LiₓNbSe₂ (0<x≤3), LiₓVSe₂ (0<x≤1), LiₓNiPS₂ (0<x≤1,.5), LiₓFePS₂ (0<x≤1.5).

Bei der Verwendung als Anode wird als Anodenmaterial eine übliche und aus dem Stand der Technik bekannte elektronenleitende elektrochemisch aktive Verbindung (Anodenverbindung) inkorporiert, wobei insbesondere die folgenden zu nennen sind:
Lithium, Lithium enthaltende Metallegierungen, micronisierter Kohlenstoffruß, natürlicher und synthetischer Graphit, synthetisch graphitierter Kohlestaub und Kohlefasern, Oxide, wie Titanoxid, Zinkoxid, Zinnoxid, Molybdenoxid, Wolframoxid, Carbonate, wie Titancarbonat, Molybdencarbonat, und Zinkcarbonat.

Bei der Verwendung zur Herstellung von oder als Anode wird der erfindungsgemäßen Mischung bis zu 20 Gew.-%, bezogen auf das Gesamtgewicht der Mischung, Leitruß und ggf. die oben erwähnten üblichen Zusatzstoffe zugesetzt. Bei der Verwendung zur Herstellung von oder als Kathode enthält die Mischung, bezogen auf ihr Gesamtgewicht, 0,1 bis 20 Gew.-% Leitruß.

Die erfindungsgemäßen Mischungen können in elektrochemischen Zellen als alleiniger Festelektrolyt und/oder Separator und/oder Elektrode oder im Gemisch mit anderen Festelektrolyten, Separatoren und/oder Elektroden eingesetzt werden.

Ferner betrifft die vorliegende Erfindung einen insbesondere in elektrochemischen Zellen verwendbaren Verbundkörper, vorzugsweise in Form einer Folie, weiter bevorzugt in Form einer Folie mit einer Gesamtdicke von 15 bis 1500 µm, insbesondere mit einer Gesamtdicke von 50 bis 500 µm, umfassend mindestens eine erste Schicht, die eine elektronenleitende, elektrochemisch aktive Verbindung enthält, und mindestens eine zweite Schicht, die die oben definierte erfindungsgemäße Mischung enthält und frei ist von einer elektronenleitenden, elektrochemisch aktiven Verbindung.

Ferner beschreibt die vorliegende Erfindung ein Verfahren zur Herstellung eines derartigen Verbundkörpers, das die folgenden Stufen umfaßt:
(I) Herstellen mindestens einer ersten Schicht, wie oben definiert;
(II) Herstellen mindestens einer zweiten Schicht, wie oben definiert; und
(III) anschließendes Zusammenbringen der mindestens einen ersten Schicht mit der mindestens einen zweiten Schicht durch ein herkömmliches Beschichtungsverfahren.

Vorzugsweise wird die mindestens eine zweite Schicht auf einem temporären Träger hergestellt. Dabei können erfindungsgemäß üblicherweise verwendete temporäre Träger, wie z.B. eine Trennfolie aus einem Polymer oder einem vorzugsweise beschichteten Papier, wie z.B. eine silikonisierte Polyesterfolie eingesetzt werden. Die Herstellung dieser zweiten Schicht ist jedoch auch auf einem permanenten Träger, wie z.B. einer Ableiterelektrode oder aber auch ganz ohne Träger möglich.

Das Zusammenbringen bzw. die Herstellung der oben definierten Schichten erfolgt durch drucklose Verfahren zur Beschichtung bzw. Herstellung von Folien, wie z.B. Gießen oder Rakeln, sowie durch Verarbeitungsverfahren unter Druck, wie z.B. Extrudieren, Laminieren, Kaschieren, Kalandrieren oder Pressen. Gegebenenfalls kann der so hergestellte Verbundkörper durch Strahlung, elektrochemisch oder thermisch vernetzt bzw. gehärtet werden.

Selbstverständlich kann neben der oben definierten zweiten Schicht auch die oben definierte erste Schicht die erfindungsgemäße Mischung enthalten.

Wie sich aus obigem ergibt, ist es somit ohne weiteres möglich einen Verbundkörper mit den Bestandteilen Trennfolie/Separator (zweite Schicht)/ Elektrode (erste Schicht) bereitzustellen.

Ferner ist es möglich durch doppelseitige Beschichtung einen Verbundkörper mit den Bestandteilen Anode/Separator/Kathode zur Verfügung zu stellen.

Dabei wird beispielsweise so vorgegangen:

Zunächst werden ein Anodenmaterial, z.B. Zinnoxid, Leitruß, die erfindungsgemäße Mischung, ein Leitsalz und ein Weichmacher, z.B. Propylencarbonat, miteinander vermischt und das resultierende Gemisch auf eine Ableiterelektrode gegossen und anschließend durch UV-Licht bestrahlt (Komponente 1). Anschließend wird ein Kathodenmaterial, z.B. LiMn₂O₄, auf eine mit Leitruß beschichtete Ableiterelektrode gebracht und darauf ein Gemisch aus der erfindungsgemäßen Mischung, einem Leitsalz und einem Weichmacher gegossen. Auch dieser Verbund wird anschließend durch UV-Licht bestrahlt (Komponente 2). Durch Zusammenbringen der beiden oben beschriebenen Komponenten wird ein Verbundkörper erhalten, der in Verbindung mit einem beliebigen Fest- und/oder Flüssigelektrolyt als elektrochemische Zelle verwendet werden kann.

Ein wie oben beschriebener Verbundkörper Anode/Separator/Kathode kann auch ohne die Verwendung eines Trägers bzw. der Ableiterelektroden hergestellt werden, da der erhaltene Verbundkörper bestehend aus einer ersten und einer zweiten Schicht, wie oben definiert, an sich eine für die Verwendung in elektrochemischen Zellen ausreichende mechanische Stabilität besitzt.

Die Befüllung derartiger Verbundkörper mit einem Elektrolyt und Leitsalz kann sowohl vor dem Zusammenbringen als auch vorzugsweise nach dem Zusammenbringen der Schichten, ggf. nach dem Kontaktieren mit geeigneten Ableiterelektroden, z.B. einer Metallfolie und sogar nach dem Einbringen des Verbundkörpers in ein Batteriegehäuse erfolgen, wobei die spezielle mikroporöse Struktur der Schichten bei Verwendung der erfindungsgemäßen Mischung, insbesondere bedingt durch die Anwesenheit des oben definierten Feststoffs im Separator und ggf. in den Elektroden, das Aufsaugen des Elektrolyten und des Leitsalzes und die Verdrängung der Luft in den Poren ermöglicht. Das Befüllen kann bei Temperaturen von 0 °C bis ungefähr 100°C in Abhängigkeit vom verwendeten Elektrolyt durchgeführt werden.

Die erfindungsgemäßen elektrochemischen Zellen können insbesondere als Auto-, Geräte- oder Flachbatterie verwendet werden.

Wie sich aus obigem ergibt, betrifft die vorliegende Erfindung auch die Verwendung der erfindungsgemäßen Mischung oder des oben beschriebenen Verbundkörpers zur Herstellung eines Festelektrolyten, eines Separators, einer Elektrode, in einem Sensor, einem elektrochromen Fenster, einem Display, einem Kondensator oder einer ionenleitenden Folie, sowie einen Festelektrolyt, einen Separator, eine Elektrode, einen Sensor, ein elektrochromes Fenster, ein Display, einen Kondensator oder eine ionenleitende Folie, die jeweils die erfingungsgemäße Mischung oder den oben beschriebenen Verbundkörper enthalten.

Ferner betrifft sie eine elektrochemische Zelle, umfassend einen Festelektrolyt, Separator oder eine Elektrode, wie oben definiert, oder eine Kombination aus zwei oder mehr davon, sowie die Verwendung der oben definierten elektrochemischen Zelle als Autobatterie, Gerätebatterie oder Flachbatterie.

Darüber hinaus betrifft die vorliegende Erfindung ganz allgemein die Verwendung eines Feststoffs III mit einer Primärpartikelgröße von 5 nm bis 20 µm in einem Festelektrolyt, einem Separator oder einer Elektrode zur Erhöhung der Zyklenstabilität von elektrochemischen Zellen, da sich bei der Fertigstellung der vorliegenden Erfindung herausgestellt hat, daß der Zusatz eines derartigen Feststoffs sich überaus positiv auf diese Eigenschaft von elektrochemischen Zellen auswirkt.

### BEISPIELE

### Beispiel 1

75 g eines mit Epoxysilan hydrophobierten, Wollastonit (Tremin® 800 EST, Firma Quarzwerke Frechen) mit einer mittleren Partikelgröße von 3 µm, dessen wäßrige Suspension einen pH-Wert von 8,5 aufwies, wurde mit einem Schnellrührer in 300 g Toluol dispergiert. Anschließend wurden zu der Mischung 12,5 g eines Polyethylenoxids mit einem mittleren Molekulargewicht (Zahlenmittel) von 2.000.000 (Polyox®, Firma Union Carbide), 12,5 g eines Methacrylsäurediesters eines Propylenoxid-Ethylenoxid-Blockpolymerisats (Pluriol® PE600, Firma BASF Aktiengesellschaft) und 0,02 g eines UV-Photoinitiators (Lucirin® BDK, Firma BASF Aktiengesellschaft) gegeben.

Dann wurde das Gemisch mit einem Rakel mit einem Gießspalt von 300 µm auf ein silikoniertes Trennpapier bei 60 °C aufgetragen, das Verdünnungsmittel innerhalb von 5 Minuten entfernt und nach dem Abziehen der getrockneten Beschichtung ein etwa 40 µm dicker Film erhalten, der unter Argonatmosphäre durch 10 minütige Belichtung bei 5 cm Abstand unter einem Feld aus superaktinischen Leuchtstoffröhren (TL 09, Firma Philipps) photovernetzt wurde.

Der flexible Film wies eine ausgezeichnete Biegefestigkeit auf. Biegeradien bis weit unter 1 mm wurden ohne zu brechen toleriert.

Der Film zeigte auch nach über zweiwöchiger Lagerung bei Raumtemperatur keine sphärolitartigen Polyethylenoxidkristalle und in den genannten, ein Leitsalz enthaltenden organischen Elektrolyten eine gute Quellresistenz.

Die ein Leitsalz enthaltenden organischen Elektrolyte wurden in ausreichender Menge durch spontanes Eindiffundieren innerhalb weniger Minuten aufgenommen bei einer Gewichtsquellung von unter 50 Gew.-%.

Der gequollene Film wies eine gute Festigkeit auf.

Die Ergebnisse sind in der Tabelle zusammengefaßt.

### Beispiel 2

60 g Wollastonit mit einer mittleren Partikelgröße von 3 µm, dessen wäßrige Suspension einen pH-Wert von 8,5 aufwies, wurde mit einem Schnellrührer in 200 g Tetrahydrofuran (THF) dispergiert. Anschließend wurden zu der Mischung 13,3 g eines Polyethylenoxids mit einem mittleren Molekulargewicht (Zahlenmittel) von 2.000.000 (Polyox®, Firma Union Carbide), 13,3 g eines Methacrylsäurediesters eines Propylenoxid-Ethylenoxid-Blockpolymerisats (Pluriol® PR600, Firma BASF Aktiengesellschaft), 13,3 g eines in THF löslichen Vinylidenfluorid-Hexafluorpropen-Copolymeren (Kynarflex® 2850, Firma ELF-Atochem) und 0,02 g eines UV-Photoinitiators (Lucirin® BDK, Firma BASF Aktiengesellschaft) gegeben.

Dann wurde das Gemisch mit einem Rakel mit einem Gießspalt von 500 µm auf ein silikoniertes Trennpapier bei 60 °C aufgetragen, das Verdünnungsmittel innerhalb von 5 Minuten entfernt und nach dem Abziehen der getrockneten Beschichtung ein etwa 50 µm dicker Film erhalten, der unter Stickstoffatomsphäre durch 10 minütige Belichtung bei 5 cm Abstand unter einem Feld aus superaktinischen Leuchtstoffröhren (TL 09, Firma Philipps) photovernetzt wurde.

Der flexible Film wies eine ausgezeichnete Biegefestigkeit auf. Biegeradien bis weit unter 1 mm wurden ohne zu brechen toleriert.

Der Film zeigte auch nach über zweiwöchiger Lagerung bei Raumtemperatur keine sphärolitartigen Polyethylenoxidkristalle und in den genannten ein Leitsalz enthaltenden organischen Elektrolyten eine gute Quellresistenz.

Die ein Leitsalz enthaltenden organischen Elektrolyte wurden in ausreichender Menge durch spontanes Eindiffundieren innerhalb weniger Minuten aufgenommen bei einer Gewichtsquellung von unter 50 Gew.-%.

Der gequollende Film wies eine gute Festigkeit auf.

Die Ergebnisse sind in der Tabelle zusammengefaßt.

### Beispiel 3

60 g Quarzmehl (Silbond® 800 EST, Firma Quarzwerke Frechen) mit einer mittleren Partikelgröße von 3 µm, dessen wäßrige Suspension einen pH-Wert von 7,5 aufwies, wurde mit einem Schnellrührer in 250 g Tetrahydrofuran (THF) dispergiert. Anschließend wurden zu der Mischung 13,3 g eins Polyethylenoxids mit einem mittleren Molekulargewicht (Zahlenmittel) von 3.000.000 (Polyox®, Firma Union Carbide), 13,3 g einse Methacrylsäurediesters eines Propylenoxid-Ethylenoxid-Blockpolymerisats (Pluriol® PE600, Firma BASF Aktiengesellschaft) und 13,3 g eines in THF löslichen Vinylidenfluorid-Hexafluorpropen-Copolymeren (Kynarflex® 2850, Firma ELF-Atochem) gegeben.

Dann wurde das Gemisch mit einem Rakel mit einem Gießspalt von 500 µm auf ein silikoniertes Trennpapier bei 60 °C aufgetragen, das Verdünnungsmittel innerhalb von 5 Minuten entfernt und nach dem Abziehen der getrockneten Beschichtung ein etwa 50 µm dicker Film erhalten, der unter Stickstoffatmosphäre durch Bestrahlung mit Elektronen bei 150 kV-Beschleunigungsspannung mit einer Dosis von 30 Mrad vernetzt wurde.

Der flexible Film wies eine ausgezeichnete Biegefestigkeit auf. Biegeradien bis weit unter 1 mm wurden ohne zu brechen toleriert.

Der Film zeigte auch nach über zweiwöchiger Lagerung bei Raumtemperatur keine sphärolitartigen Polyethylenoxidkristalle und in den genannten ein Leitsalz enthaltenden organischen Elektrolyten eine gute Quellresistenz.

Die ein Leitsalz enthaltenden organischen Elektrolyte wurden in ausreichender Menge durch spontanes Eindiffundieren innerhalb weniger Minuten aufgenommen bei einer Gewichtsquellung von unter 50 Gew.-%.

Der gequollene Film wies eine gute Festigkeit auf.

Die Ergebnisse sind in der Tabelle zusammengefaßt.

### Beispiel 4

60 g eines mit Methacrylsilan hydrophobierten Wollastonit mit einer mittleren Partikelgröße von 3 µm, dessen wäßrige Suspension einen pH-Wert von 8,5 aufwies, wurde mit einem Schnellrührer in 200 g Tetrahydrofuran (THF) dispergiert. Anschließend wurden zu der Mischung 13,3 g eines Polyethylenoxids mit einem mittleren Molekulargewicht (Zahlenmittel) von 2.000.000 (Polyox®, Firma Union Carbide), 13,3 g eines Methacrylsäurediesters eines Propylenoxid-Ethylenoxid-Blockpolymerisats (Pluriol® PE600, Firma BASF Aktiengesellschaft), 13,3 g eines in THF löslichen Vinylidenfluorid-Hexafluorpropen-Copolymeren (Kynarflex® 2850, Firma ELF-Atochem) und 0,02 g Azobisisobutyronitril gegeben.

Dann wurde das Gemisch mit einem Rakel mit einem Gießspalt von 500 µm auf ein silikoniertes Trennpapier bei 60 °C aufgetragen, das Verdünnungsmittel innerhalb von 5 Minuten entfernt und nach dem Abziehen der getrockneten Beschichtung ein etwa 50 µm dicker Film erhalten, der unter Stickstoffatmosphäre durch 10 minütige Belichtung bei 5 cm Abstand unter einem Feld aus superaktinischen Leuchtstoffröhren (TL 09, Firma Philipps) photovernetzt wurde.

Der flexible Film wies eine ausgezeichnete Biegefestigkeit auf. Biegeradien bis weit unter 1 mm wurden ohne zu brechen toleriert.

Der Film zeigte auch nach über zweiwöchiger Lagerung bei Raumtemperatur keine sphärolitartigen Polyethylenoxidkristalle und in den genannten ein Leitsalz enthaltenden organischen Elektrolyten eine gute Quellresistenz.

Die ein Leitsalz enthaltenden organischen Elektrolyte wurden in ausreichender Menge durch spontanes Eindiffundieren innerhalb weniger Minuten aufgenommen bei einer Gewichtsquellung von unter 50 Gew.-%.

Der gequollene Film wies eine gute Festigkeit auf.

Die Ergebnisse sind in der Tabelle zusammengefaßt.

### Beispiel 5

Beispiel 5 entspricht im wesentlichen Beispiel 1, jedoch mit folgenden Änderungen: Anstelle von Tremin® 600 EST wurde Tremin® 939-600 MST, ein mit Methacrylsilan hydrophobierter nadelförmiger Wollastonit mit einer mittleren Partikelgröße von 3,5 µm, anstelle von Pluriol® PE600 wurde Pluriol® E600, ein Ethylenoxid-Polymerisat, jeweils in Mengen wie in Beispiel 1 angegeben, eingesetzt; der zum Auftragen des erhaltenen Gemischs auf ein silikoniertes Trennpapier verwendete Rakel besaß einen Gießspalt von 200 µm.

Die Ergebnisse des erhaltenen, entsprechend Beispiel 1 behandelten Films sind in der Tabelle gezeigt.

### Vergleichsbeispiel 1

12,5 g eines Polyethylenoxids mit einem mittleren Molekulargewicht (Zahlenmittel) von 2.000.000 (Polyox®, Firma Union Carbide), 12,5 g eines Methacrylsäurediesters eines Propylenoxid-Ethylenoxid-Blockpolymerisats (Pluriol® PE600, Firma BASF Aktiengesellschaft) und 0,02 g eines UV-Photoinitiators (Lucirin® BDK, Firma BASF Aktiengesellschaft) wurden in 200 g THF gelöst.

Anschließend wurde das Gemisch mit einem Rakel mit einem Gießspalt von 750 µm auf ein silikoniertes Trennpapier bei 60 °C aufgetragen, das Verdünnungsmittel innerhalb von 5 Minuten entfernt und nach dem Abziehen der getrockneten Beschichtung ein etwa 40 µm dicker Film erhalten, der unter Argonatmosphäre durch 10 minütige Belichtung bei 5 cm Abstand unter einem Feld aus superaktinischen Leuchtstoffröhren (TL 09, Firma Philipps) photovernetzt wurde.

Der flexible Film wies eine ausgezeichnete Biegefestigkeit auf. Biegeradien bis weit unter 1 mm wurden ohne zu brechen toleriert. Der Film zeigte auch nach über zweiwöchiger Lagerung bei Raumtemperatur keine sphärolitartigen Polyethylenoxidkristalle und in den genannten, ein Leitsalz enthaltenden organischen Elektrolyten eine befriedigende Quellresistenz.

Die ein Leitsalz enthaltenden organischen Elektrolyte wurden in ausreichender Menge durch spontanes Eindiffundieren innerhalb weniger Minuten aufgenommen bei einer Gewichtsquellung von unter 150 Gew.-%, wobei eine erhebliche Größen- und Dickenänderung des Films erfolgte.

Die Festigkeit war deutlich geringer als in den Beispielen 1 bis 3.

In Lithiumionenbatterien führte der Film durchweg zum Versagen der Zellen durch zu hohe Selbstentladungsraten oder Mikrokurzschlüsse.

Die Ergebnisse sind in der Tabelle zusammengefaßt.

### Vergleichsbeispiel 2

75 g eines mit Epoxisilan hydrophobierten Wollastonit (Tremin® 800 EST, Firma Quarzwerke Frechen) mit einer mittleren Partikelgröße von 3 µm, dessen wäßrige Suspension einen pH-Wert von 8,5 aufwies, wurde mit einem Schnellrührer in 300 g Toluol dispergiert. Anschließend wurden zu der Mischung 12,5 g eines Polyethylenoxids mit einem mittleren Molekulargewicht (Zahlenmittel) von 2.000.000 (Polyox®, Firma Union Carbide), 12,5 g eines Methacrylsäurediesters eines Propylenoxid-Ethylenoxid-Blockpolymerisats (Pluriol® PE600, Firma BASF Aktiengesellschaft) und 0,02 g eines UV-Photoinitiators (Lucirin® BDK, Firma BASF Aktiengesellschaft) gegeben.

Dann wurde das Gemisch mit einem Rakel mit einem Gießspalt von 300 µm auf ein silikoniertes Trennpapier bei 60 °C aufgetragen, das Verdünnungsmittel innerhalb von 5 Minuten entfernt und nach dem Abziehen der getrockneten Beschichtung ein etwa 40 µm dicker Film erhalten.

Der flexible Film wies eine ausgezeichnete Biegefestigkeit auf. Biegeradien bis weit unter 1 mm wurden ohne zu brechen toleriert.

Der Film zeigte nach über zweiwöchiger Lagerung bei Raumtemperatur kleine kreisförmige sphärolitartige Polyethylenoxidkristallzonen und in den genannten, ein Leitsalz enthaltenden organischen Elektrolyten keine ausreichende Quellresistenz. Bereits nach wenigen Minuten Quellzeit entstehen Risse oder der Film verklebt, so daß der gequollene Film nicht mehr handhabbar ist.

Die Ergebnisse sind in der Tabelle zusammengefaßt.

### Vergleichsbeispiel 3

Gemäß US-A 5429891, Beispiel 1 (F), wurden zu einer Mischung aus 30 g eines Vinylidenfluorid-Hexafluorpropen-Copolymeren (Kynarflex® 2822, Firma ELF-Atochem), 20 g einer silanisierten pyrogenen Kieselsäure (Aerosil R974, Firma Degussa), deren wäßrige Suspension einen pH-Wert von 7 aufweist, 50g Dibutylphthalat (Palatinol C, Firma BASF Aktiengesellschaft) und 200 g Aceton 5 Gew.-% bezogen Dibutylphthalat an Trimethylolpropantrimethacrylat gegeben.

Dann wurde das Gemisch mit einem Rakel mit einem Gießspalt von 750 µm auf eine Glasplatte aufgetragen, 15 Minuten im Luftstrom getrocknet und zwischen 0,075 mm dicke Mylar®-Schichten eingebettet. Die 100 µm starke Filmschicht wurde anschließend durch Bestrahlung mit Elektronen einer Energie von 4,5 MeV mit einer Dosis von 5 Mrad durch Bestrahlung vernetzt, wobei pro Bestrahlungsdurchgang eine Dosis von 2,5 Mrad eingesetzt wurde.

Der flexible Film wies eine gute Biegefestigkeit auf.

Vor dem Einsatz des Films in Lithium-Ionen-Batterien war eine aufwendige Entfernung des Weichmachers durch Extraktion aus dem Film erforderlich, da ansonsten durch Vergiftung der Elektroden eine nur mangelhafte Zyklenfestigkeit erreicht wird. Zur Entfernung des Weichmachers wurde der Film fünfmal je 10 Minuten mit dem 50-fachen des Filmgewichts an Diethylether bei Raumtemperatur extrahiert. Nach der Entfernung des Weichmachers ist der Film instabil und bricht leicht beim Biegen.

Der weichmacherfreie Film zeigte in den genannten ein Leitsalz enthaltenden organischen Elektrolyten eine gute Quellresistenz.

Die ein Leitsalz enthaltenden organischen Elektrolyte wurden in ausreichender Menge durch spontanes Eindiffundieren innerhalb weniger Minuten aufgenommen.

Der gequollene Film wies eine gute Festigkeit auf.

Die Ergebnisse sind in der folgenden Tabelle zusammengefaßt.

**Tabelle**

| | Bsp. 1 | Bsp. 2 | Bsp. 3 | Bsp. 4 | Bsp. 5 | Vgl. 1 | Vgl. 2 | Vgl. 3 |
|---|---|---|---|---|---|---|---|---|
| Festigkeit mit Weichmacher | entfällt | entfällt | entfällt | entfällt | entfällt | entfällt | entfällt | 2 |
| Extraktion | entfällt | entfällt | entfällt | entfällt | entfällt | entfällt | entfällt | nötig |
| Festigkeit ohne Weichmacher | 2 | 1 | 1 | 1 | 1 | 2 | 5 | 5 |
| Quellresistenz | 2 | 2 | 2 | 2 | 2 | 3 | 5 | 2 |
| Festigkeit nach dem Quellen | 2 | 2 | 2 | 2 | 2 | 4 | 6 | 2 |
| Leitfähigkeit | 2 | 2 | 2 | 2 | 1 | 2 | 4 | 2 |
| Kurzschlußfestigkeit | 1 | 1 | 1 | 1 | 1 | 4 | 6 | 1 |
| Elektrochemische Belastbarkeit | 1 | 2 | 3 | 2 | 1 | 5 | 6 | 4 |
| Zyklenfestigkeit | 1 | 1 | 1 | 1 | 1 | 5 | 6 | 2 |
| Noten: 1 sehr gut 2 gut 3 befriedigend 4 mangelhaft 5 schlecht 6 zu schlecht, Test nicht durchführbar | | | | | | | | |

## Patentansprüche

1. Verwendung einer Mischung Ia, enthaltend ein Gemisch IIa, bestehend aus
a) 1 bis 95 Gew.-% eines Feststoffs III mit einer Primärpartikelgröße von 5 nm bis 20 µm und
b) 5 bis 99 Gew.-% einer polymeren Masse IV, erhältlich durch Polymerisation von
b1) 5 bis 100 Gew.-% bezogen auf die Masse IV eines Kondensationsprodukts V aus
α) mindestens einer Verbindung VI, die in der Lage ist mit einer Carbonsäure oder einer Sulfonsäure oder einem Derivat oder einem Gemisch aus zwei oder mehr davon zu reagieren, und
β) mindestens 1 Mol pro Mol der Verbindung VI einer Carbonsäure oder Sulfonsäure VII, die mindestens eine radikalisch polymerisierbare funktionelle Gruppe aufweist, oder eines Derivats davon oder eines Gemischs aus zwei oder mehr davon
und
b2) 0 bis 95 Gew.-% bezogen auf die Masse IV einer weiteren Verbindung VIII mit einem mittleren Molekulargewicht (Zahlenmittel) von mindestens 5000 mit Polyethersegmenten in Haupt- oder Seitenkette,
wobei der Gewichtsanteil des Gemischs IIa an der Mischung Ia 1 bis 100 Gew.-% beträgt,
in einem elektrochromen Fenster, wobei als Feststoff III basische Feststoffe mit einer Primärpartikelgröße von 5 nm bis 20 µm ausgeschlossen sind.

2. Verwendung einer Mischung Ib, enthaltend ein Gemisch IIb, bestehend aus
a) 1 bis 95 Gew.-% eines Feststoffs III mit einer Primärpartikelgröße von 5 nm bis 20 µm und
b) 5 bis 99 Gew.-% eines Polymers IX, erhältlich durch Polymerisation von
b1) 5 bis 75 Gew.-% bezogen auf das Polymer IX einer zur radikalischen Polymerisation befähigten Verbindung X, die verschiedenen von der Carbonsäure oder der Sulfonsäure VII oder einem Derivat davon ist, oder eines Gemischs aus zwei oder mehr davon
und
b2) 25 bis 95 Gew.-% bezogen auf das Polymer IX einer weiteren Verbindung VIII mit einem mittleren Molekulargewicht (Zahlenmittel) von mindestens 5000 mit Polyethersegmenten in Haupt- oder Seitenkette,
wobei der Gewichtsanteil des Gemischs IIb an der Mischung Ib 1 bis 100 Gew.-% beträgt,
in einem elektrochromen Fenster, wobei als Feststoff III basische Feststoffe mit einer Primärpartikelgröße von 5 nm bis 20 µm ausgeschlossen sind.

3. Verwendung nach Anspruch 1 oder 2, wobei der Feststoff III ein anorganischer Feststoff ausgewählt aus der Gruppe bestehend aus Oxiden, Mischoxiden und Silikaten der Elemente der I., II., III. oder IV. Hauptgruppe oder der IV. Nebengruppe des Periodensystems ist oder ein Gemisch aus zwei oder mehr davon.

4. Verwendung nach einem der vorherigen Ansprüche, wobei der Feststoff III ein Oxid oder ein Mischoxid ist.

5. Verwendung nach Anspruch 4, wobei das Oxid oder Mischoxid ausgewählt ist aus der Gruppe bestehend aus Siliciumdioxid, Aluminiumoxid, Magnesiumoxid, Titanoxid oder Mischoxiden der Elemente Silicium, Calcium, Aluminium, Magnesium oder Titan.

6. Verwendung nach Anspruch 1 oder 2, wobei der Feststoff III ein Polymer, ausgewählt aus der Gruppe bestehend aus Polyethylen, Polypropylen, Polystyrol, Polytetrafluorethylen, Polyvinylidenfluorid, Polyamiden, Polyimiden, eine Feststoffdispersion enthaltend ein derartiges Polymer oder ein Gemisch aus zwei oder mehr davon ist.

7. Verwendung nach einem der vorherigen Ansprüche, wobei der Feststoff III eine Primärpartikelgröße von 5 nm bis 5 µm aufweist.

8. Verwendung nach einem der vorherigen Ansprüche, wobei die Verbindung VI ein ein- oder mehrwertigen Alkohol, der in der Hauptkette ausschließlich Kohlenstoffatome aufweist, ist.

9. Verwendung nach einem der vorherigen Ansprüche, wobei die Carbon- oder Sulfonsäure VII oder das Derivat davon eine α-, β-ungesättigte Carbonsäure oder einem Derivat davon ist.

10. Verwendung nach einem der vorherigen Ansprüche, wobei der Anteil der Verbindung VIII in der polymeren Masse IV 0 Gew.-% bezogen auf die Masse IV ist.

11. Verwendung nach einem der Ansprüche 2 bis 9, wobei die Verbindung X ausgewählt ist aus der Gruppe bestehend aus olefinischen Kohlenwasserstoffen, halogenhaltigen olefinischen Verbindungen, Vinylalkohol, Vinylacetat, aromatischen olefinischen Verbindungen oder Gemischen dieser Verbindungen.

12. Elektrochromes Fenster, enthaltend eine Mischung Ia, enthaltend ein Gemisch IIa, bestehend aus
a) 1 bis 95 Gew.-% eines Feststoffs III mit einer Primärpartikelgröße von 5 nm bis 20 µm und
b) 5 bis 99 Gew.-% einer polymeren Masse IV, erhältlich durch Polymerisation von
b1) 5 bis 100 Gew.-% bezogen auf die Masse IV eines Kondensationsprodukts V aus
α) mindestens einer Verbindung VI, die in der Lage ist mit einer Carbonsäure oder einer Sulfonsäure oder einem Derivat oder einem Gemisch aus zwei oder mehr davon zu reagieren, und
β) mindestens 1 Mol pro Mol der Verbindung VI einer Carbonsäure oder Sulfonsäure VII, die mindestens eine radikalisch polymerisierbare funktionelle Gruppe aufweist, oder eines Derivats davon oder eines Gemischs aus zwei oder mehr davon
und
b2) 0 bis 95 Gew.-% bezogen auf die Masse IV einer weiteren Verbindung VIII mit einem mittleren Molekulargewicht (Zahlenmittel) von mindestens 5000 mit Polyethersegmenten in Haupt- oder Seitenkette,
wobei der Gewichtsanteil des Gemischs IIa an der Mischung Ia 1 bis 100 Gew.-% beträgt,
und als Feststoff III basische Feststoffe mit einer Primärpartikelgröße von 5 nm bis 20 µm ausgeschlossen sind.

13. Elektrochromes Fenster, enthaltend eine Mischung Ib, enthaltend ein Gemisch IIb, bestehend aus
a) 1 bis 95 Gew.-% eines Feststoffs III mit einer Primärpartikelgröße von 5 nm bis 20 µm and
b) 5 bis 99 Gew.-% eines Polymers IX, erhältlich durch Polymerisation von
b1) 5 bis 75 Gew.-% bezogen auf das Polymer IX einer zur radikalischen Polymerisation befähigten Verbindung X, die verschiedenen von der Carbonsäure oder der Sulfonsäure VII oder einem Derivat davon ist, oder eines Gemischs aus zwei oder mehr davon
und
b2) 25 bis 95 Gew.-% bezogen auf das Polymer IX einer weiteren Verbindung VIII mit einem mittleren Molekulargewicht (Zahlenmittel) von mindestens 5000 mit Polyethersegmenten in Haupt- oder Seitenkette,
wobei der Gewichtsanteil des Gemischs IIb an der Mischung Ib 1 bis 100 Gew.-% beträgt,
und als Feststoff III basische Feststoffe mit einer Primärpartikelgröße von 5 nm bis 20 µm ausgeschlossen sind.
